Europäisches Patentamt

European Patent Office

Office européen des brevets

(19)

(11) Veröffentlichungsnummer: **0 127 575 B1**

(12) **EUROPÄISCHE PATENTSCHRIFT**

(45) Veröffentlichungstag der Patentschrift: **16.01.91**

(21) Anmeldenummer: **84810199.4**

(22) Anmeldetag: **26.04.84**

(51) Int. Cl.⁵: **C 04 B 18/24,** C 04 B 16/12, B 44 C 3/04

(54) Werkstoff, Verfahren zu seiner Herstellung und Verwendung des Werkstoffes.

(30) Priorität: **28.04.83 CH 2276/83**

(43) Veröffentlichungstag der Anmeldung:
**05.12.84 Patentblatt 84/49**

(45) Bekanntmachung des Hinweises auf die
Patenterteilung:
**16.01.91 Patentblatt 91/03**

(84) Benannte Vertragsstaaten:
**AT DE FR SE**

(56) Entgegenhaltungen:
**BE-A- 620 308**
**DE-A-1 940 321**
**DE-C- 589 804**
**DE-C- 658 582**
**DE-C- 739 166**
**GB-A-2 012 832**
**US-A-1 421 954**

(73) Patentinhaber: **Steiner-Delley, Yvonne**
**Casa Blass**
**CH-6537 Grono (CH)**

(72) Erfinder: **Steiner-Delley, Josef Gottfried**
**Konsumstrasse 14 b**
**CH-3007 Bern (CH)**

(74) Vertreter: **AMMANN PATENTANWAELTE AG**
**BERN**
**Schwarztorstrasse 31**
**CH-3001 Bern (CH)**

EP 0 127 575 B1

Courier Press, Leamington Spa, England.

**Beschreibung**

Die Erfindung betrifft einen Werkstoff für die Bauindustrie, insbesondere zur Herstellung asbestfreier Rohplatten, ein Verfahren zu seiner Herstellung und seine Verwendung für eine Vielzahl anderer Zwecke, wofür er sich auf Grund seiner außerordentlichen Eigenschaften hervorragend eignet.

Der neue Werkstoff besteht aus einem vor dem Abbinden verformbaren Gemisch mindestens aus Wasser, Zement und diesen beigefügtem Papier, wobei das Papier die Form von flachen Teilchen mit einer Fläche von je ungefähr 1/2 cm² besitzt und Papier und Zement ungefähr im Gewichtsverhältnis 100:750 stehen. Als Papier kann ohne Nachteil Altpapier verwendet werden, das hierdurch eine hochwertige Verwendungsmöglichkeit findet.

Bisher schon vorgeschlagene Gemische zur Herstellung asbestfreier Platten enthalten z.T. ebenfalls Papier bzw. Altpapier, das jedoch vor der Verwendung chemisch behandelt (entzuckert) werden muß, um eine Bindung mit dem Zement zu erreichen, und damit erhält man Platten mit ungenügender Festigkeit, wenn mann dem Gemisch nicht zusätzlich verstärkende Fasern irgendwelcher Art beifügt. Beispiele für eine derartige chemische Vorbehandlung, aber auch für die Verwendung von kleinen kugeligen oder krümeligen Papierteilchen findet man z.B. in DE—A—1 940 321 (Beispiel 3) und DE—C— 589 804 (Patentanspruch).

Beim neuen Werkstoff jedoch ist eine chemische Behandlung des Papiers bzw. Altpapiers unnötig, und die Festigkeit daraus hergestellter Platten oder anderer Gegenstände ist bereits ohne verstärkende Zuschläge überragend gut, die Festigkeit z.B. von Asbestplatten erheblich übertreffend. Der neue Werkstoff bestizt mithin sehr überraschende Eigenschaften und Vorteile. Vielleicht ist dies wenigstens teilweise dem Umstand zu verdanken, daß für ihn Papierteilchen von einer gewissen Größe verwendet werden, während frühere Vorschläge und Versuche stets von feingemahlenem Papier oder Papierschliff ausgegangen sind. Ein Versuch sprach für diese Vermutung, bei dem die für den neuen Werkstoff vorgesehenen Papierteilchen zu Kügelchen zusammengerollt worden waren; der daraus resultierende Werkstoff hatte annähernd ebenso schlechte Festigkeitseigenschaften wie die bisher schon vorgeschlagenen Werkstoffe mit feinteiligem Papier. Nicht auszuschließen ist ferner, daß beim neuen Werkstoff die andere physikalische Form dem Papier erlaubt, beim Abbinden des Zements an chemischen Reaktionen teilzunehmen. Es erscheint auch denkbar, daß das Wasser in die bisher vorgeschlagenen, sehr feinen Papierteilchen lediglich wegen seiner Oberflächenspannung nicht einzudringen vermochte, die durch den eingerührten Zement nicht kleiner wird, während es die relativ größen Papierschnitzel oder Papierfetzen des neuen Werkstoffes ohne weiteres tränkt.

Die in dem Gemisch vorzusehende Wassermenge kann sich nach dem vorgesehenen Verarbeitungsverfahren richten, z.B. zum Spritzen größer sein als zum Gießen und Pressen; überschüssiges Wasser verdampft dann während des folgenden Abbindevorganges. Abgesehen von solchen Sonderfällen, kann man sich an ein Gewichtsverhältnis von ungefähr 1000:100:750 für Wasser, Papier und Zement halten.

Der neue Werkstoff erreicht eine besonders große Festigkeit, wenn die Papierteilchen die Form von gerupften oder gerissenen Fetzen besitzen. Andererseits bekommt er eine lockere, poröse, tuffsteinartige Struktur, wenn man in Kalkmilch eingeweichte Papierteilchen verwendet.

Die Farbe des neuen Werkstoffes bewegt sich je nach der Farbe des Papiers zwischen hellbraun und hellgrau, so daß man ihn, weil sie hell ist, leicht in gewünschter Weise färben kann. Dazu kann das Gemisch zusätzlich Farbstoffe oder Farbkörper als farbige Zuschlagstoffe enthalten. Man kann aber auch, abgesehen von ihrer Farbe, andere Zusschlagstoffe dem Gemisch beifügen, z.B. Sand als Streckmittel; dann muß man einerseits eine Verschlechterung gewisser Eigenschaften des Werkstoffes in Kauf nehmen, etwa der Festigkeit und des Wärmeisolationsvermögens, andererseits kann hierdurch eine wenn auch geringe Verbilligung resultieren. Letztere ist nicht zu erwarten beim Zusatz verstärkender Fasern, wie sie für vorbekannte Werkstoffe mit feinteiligem Papier vorgeschlagen wurden und nötig sind, und weil der neue Werkstoff schon ohne solche Fasern strenge Festigkeitsanferderungen erfüllt, erschiene ihr Zusatz darin kaum besonders zweckmäßig.

Der neue Werkstoff läßt sich auf sehr einfache Weise herstellen. Zunächst stellt man aus Papier oder Altpapier die Teilchen in Form von Schnitzeln oder Fetzen her; Vorrichtungen hierfür sind bekannt, weitere lassen sich in naheliegender Weise für diesen Zweck modifizieren. Dann mischt man Wasser und Zement im vorgesehenen Verhältnis und fügt dem die Papierteilchen bei, zweckmäßigerweise unter Umrühren, oder man nimmt das Mischen in einem Kessel mit Rührwerk vor. Ist ein tuffsteinartiger Werkstoff vorgesehen, so weicht man die Papierteilchen vor ihrem Einrühren in Kalkmilch ein, was zur Cellulose-Mineralisierung an sich bekannt ist. Etwaige Zuschlafstoffe kann man, je nach deren Art, einem Bestandteil des Gemisches oder dem fertigen Gemisch beifügen, z.B. einen löslichen Farbstoff dem Wasser, feinteilige Zuschläge der Zement-Wasser-Mischung und grobkörnige Zuschläge dem fertigen Gemisch im Anschluß an das Einrühren der Papierteilchen. Schließlich bringt man das so erhaltene Gemisch in die für den Gegenstand oder für eine weitere Behandlung vorgesehene Form, bevor es durch Trocknen und Abbinden den fertigen Werkstoff bildet.

Für die Formgebung eignen sich die verschiedensten, durchweg bekannten Verfahren, wie Gießen, Pressen, Spritzen. Schleuderguß, Dampfpressen, aber auch Modellieren von Hand sind ebenfalls möglich. Platten kann man, muß man aber nicht nach dem ebenfalls bekannten Aufwickelverfahren herstellen.

Der Erfinder hat auch festgestellt, daß man den neuen Werkstoff zudem sehr gut spanabhebend bearbeiten, z.B. sägen, bohren und feilen kann. Die Vielfalt der Verarbeitungsmöglichkeiten hat ihn veranlaßt, allerlei Eigenschaften des neuen Werkstoffes näher abzuklären. So hat er daraus eine Obstschale hergestellt und sich daraufgestellt; selbst durch ein Wippen ließ sie sich hierbei nicht zu Bruch bringen. Von den üblicherweise für Obstschalen verwendeten Werkstoffen besitzt keiner eine solche Festigkeit. Die Obstschale ließ sich bemalen und glasieren. In einem anderen Versuch hat der Erfinder eine ca. 2 cm dicke Schicht des neuen Werkstoffes auf der einen Seite Flammen von weit über 100°C ausgesetzt; nach 1/4 Stunde war die Oberflächentemperatur auf der anderen Seite erst um 15°C angestiegen. Der neue Werkstoff besitzt also eine äußerst geringe Wärmeleitfähigkeit. Weitere Versuche haben gezeigt, daß der neue Werkstoff in derselben Weise wie natürliche Baustoffe luftdurchlässig ist—im Gegensatz zum heute viel verwendeten Glas und Beton—, so daß der neue Werkstoff als Baumaterial eine wohnliche Atmosphäre im Inneren von Bauwerken sicherstellt.

Demzufolge hat der Erfinder zahlreiche andere, vorteilhafte Verwendungen des neuen Werkstoffes gefunden, insbesondere für die folgenden Zwecke:

a) in der Bauindustrie für Bausteine, Hohlziegel, Wand- und Deckenelemente und für andere tragende Elemente, zum Gießen von Böden auf der Baustelle, zum Verputz und als Spritzmörtel sowie für wärmeisolierende Schichten und Auskleidungen;

b) in anderen Anwendungsbereichen zur Herstellung feuerfester oder wärmeisolierender Gegenstände oder Auskleidungen;

c) zur Herstellung von Formteilen, wie sie beispielsweise in der Keramikindustrie bisher in Form von Gefäßen und Geschirr aus Porzellan, Steingut oder Ton erzeugt werden, oder von Plastiken (Skulpturen, Reliefs u.dgl.) durch Modellieren oder in einem der bekannten Guß- oder Preßverfahren;

d) als Halbzeug für nachfolgende spanabhende Bearbeitung.

**Patentansprüche**

1. Werkstoff für die Bauindustrie, insbesondere zur Herstellung asbestfreier Rohplatten, auf Basis von tement und Papier, dadurch gekennzeichnet, daß er aus einem vor dem Abbinden verformbaren Gemisch mindestens aus Wasser, Zement und diesen beigefügtem Papier besteht, daß das Papier die Form von flachen Teilchen mit einer Fläche von je ungefähr 1/2 cm² besitzt, und dass Papier und Zement ungefähr im Gewichtsverhältnis 100:750 stehen.

2. Werkstoff nach Anspruch 1, dadurch gekennzeichnet, daß als Papier Altpapier verwendet ist.

3. Werkstoff nach Anspruch 1, dadurch gekennzeichnet, daß das Gemisch aus Wasser, Papier und Zement ungefähr im Gewichtverhältnis 1000:100:750 besteht.

4. Werkstoff nach Anspruch 1, dadurch gekennzeichnet, daß die Papierteilchen die Form von gerupften oder gerissenen Fetzen besitzen.

5. Werkstoff nach Anspruch 1, dadurch gekennzeichnet, daß in Kalkmilch eingeweichte Papierteilchen verwendet sind.

6. Werkstoff nach Anspruch 1, dadurch gekennzeichnet, daß das Gemisch zusätzlich farbige oder als Streckmittel dienende Zuschlagstoffe enthält.

7. Verfahren zur Herstellung des Werkstoffes nach einem der Ansprüche 1 bis 4, gekennzeichnet durch die folgenden Verfahrensschritte:

a) Man stelle aus Papier oder Altpapier die Papierteilchen her;

b) man mischt Wasser und Zement im vorgesehen Verhältnis;

c) dem fügt man unter Umrühren die Papierteilchen bei;

d) man bringt das so erhaltene Gemisch in die für den Gegenstand oder für eine weitere Bearbeitung vorgesehene Form und läßt es trocknen und abbinden.

8. Verfahren nach Anspruch 7 zur Herstellung des Werkstoffes nach Anspruch 5, dadurch gekennzeichnet, daß man die Papierteilchen vor ihrem Einrühren in Kalkmilch einweicht.

9. Verfahren nach Anspruch 7 zur Herstellung des Werkstoffes nach Anspruch 6, dadurch gekennzeichnet, daß man die Zuschlagstoffe je nach ihrer Löslichkeit oder Korngröße einem Bestandteil des Gemisches oder dem fertigen Gemisch beifügt.

10. Verwendung des Werkstoffes nach einem der Ansprüche 1 bis 6 für die folgenden Zwecke:

a) In der Bauindustrie für Bausteine, Hohlziegel, Wand- und Deckelemente und für andere tragende Elemente, zum Gießen von Böden auf der Baustelle, zum Verputz und als Spritzmörtel sowie für wärmeisolierende Schichten und Auskleidungen;

b) in anderen Anwendungsbereichen zur Herstellung feuerfester oder wärmeisolierender Gegenstände oder Auskleidungen;

c) zur Herstellung von Formteilen, beispielsweise von Gefäßen oder Plastiken, durch Modellieren oder in einem Guß- oder Preßverfahren;

d) als Halbzeug für nachfolgende spanabhebende Bearbeitung.

**Revendications**

1. Matériau pour l'industrie de la construction, en particulier pour la fabrication de panneaux bruts sans amiante et à base de ciment et de papier, caractérisé en ce qu'il se compose d'un mélange moulable avant prise, comprenant au moins de l'eau, du ciment et du papier ajouté, que le papier a la forme de particules plates d'une surface d'environ 1/2 cm² chacune, et que le papier et le ciment se trouvent dans des proportions pondérales de 100:750.

2. Matériau selon la revendication 1, caractérisé en ce que du vieux papier est utilisé comme papier.

3. Matériau selon la revendication 1, caractérisé en ce que que le mélange d'eau, de papier et de ciment se trouve dans les proportions pondérales d'environ 1000:100:750.

4. Matériau selon la revendication 1, caractérisé en ce que les particules de papier ont la forme de lambeaux arrachés ou déchirés.

5. Matériau selon la revendication 1, caractérisé en ce que des particules de papier trempées dans du lait de chaux sont utilisées.

6. Matériau selon la revendication 1, caractérisé en ce que le mélange contient en plus des agrégats colorés ou servant de charge.

7. Procédé pour la fabrication du matériau selon l'une des revendications 1 à 4, caractérisé par les étapes de procédé suivantes:

a) les particules de papier sont fabriquées à partir de papier ou de vieux papier;

b) l'eau et le ciment sont mélangés dans les proportions prévues;

c) les particules de papier sont ajoutées sous agitation;

d) le mélange ainsi obtenu est transformé dans le moule prévu pour l'objet ou pour un traitement complémentaire, et on le laisse sécher et durcir.

8. Procédé selon la revendication 7, pour la fabrication du matériau selon la revendication 5, caractérisé en ce que l'on trempe les particules de papier dans du lait de chaux avant leur gâchage.

9. Procédé selon la revendication 7, pour la fabrication du matériau selon la revendication 6, caractérisé en ce que l'on ajoute les agrégats selon leur solubilité ou leur granulométrie, à un constituant du mélange ou au mélange terminé.

10. Utilisation du matériau selon l'une des revendications 1 à 6 pour les usages suivants:

a) dans l'industrie du bâtiment pour les blocs de construction, briques creuses, éléments de parois our de plafonds et pour d'autres éléments porteurs, pour le coulage de dalles sur le chantier, pour les crépis et comme mortier d'injection, ainsi que pour les couches et revêtements d'isolation thermique;

b) dans d'autres domaines d'utilisation pour la fabrication d'objets ou de revêtements incombustibles ou isolants;

c) pour la fabrication d'objets préformés, par exemple de récipients ou de plastiques, par moulage ou selon un procédé de coulée ou de compression;

d) comme produit semi-fini pour les traitements subséquents par enlèvement de copeaux.

## Claims

1. A material for the building industry, especially for the manufacture of asbestos-free base plates based on cement and paper, characterized by the fact that it consists of a mixture, workable before setting, comprising at least water, cement and paper added thereto, that the paper is in the form of small flat pieces each having an area of about 1/2 cm$^2$, and that the weight ratio between the paper and the cement is about 100:750.

2. The material of claim 1, characterized by the fact that waste paper is used as said paper.

3. The material of claim 1, characterized by the fact that the mixture of water, paper and cement has an approximate weight ratio of 1000:100:750.

4. The material of claim 1, characterized by the fact that the paper pieces have the form of shredded or torn scraps.

5. The material of claim 1, characterized by the fact that paper pieces are used which have been soaked in milk of lime.

6. The material of claim 1, characterized by the fact that the mixture additionally contains coloured aggregates or aggregates serving as extenders.

7. A process for the manufacture of the material according to any one of claims 1 to 4, characterized by the following manufacture steps:

a) the paper pieces are made from paper or waste paper;

b) water and cement are mixed in the defined proportions;

c) the paper pieces are stirred into the mixture;

d) the mixture thus obtained is poured into moulds provided for the object to be manufactured or for further processing, and it is left to dry and set.

8. The process of claim 7 for the manufacture of the material according to claim 5, characterized by the fact that the paper pieces are soaked in milk of lime before being stirred into the mixture.

9. The process of claim 7 for the manufacture of the material according to claim 6, characterized by the fact that the aggregates, depending on their solubility or grain size, are added to a consituent of the mixture or to the final mixture.

10. The use of the material of any one of claims 1 to 6 for the following purposes:

a) in the building industry for building blocks, air bricks, wall and ceiling elements and for other supporting elements, for the casting of floors on the building site, for roughcasting and as spray mortar, as well as for heat insulating layers and linings;

b) in other fields of application for the manufacture of fireproof or heat insulating objects or linings;

c) for the manufacture of pre-shaped parts, for example containers or plastics, by moulding or in a casting or compressing process;

d) as semi-finished products for a subsequent cutting processing.